# EUROPÄISCHE PATENTANMELDUNG

(11) **EP 2 151 673 A2**
(43) Veröffentlichungstag der Anmeldung: **10.02.2010**
(21) Anmeldenummer: 09008724.8
(22) Anmeldetag: 03.07.2009
(51) Int. Cl.: G01K 1/16

(54) **Verfahren sowie Vorrichtung zum Messen der Temperatur**

(30) Priorität: 31.07.2008 DE 102008035638; 05.11.2008 DE 102008056025
(71) Anmelder: Greisinger electronic GmbH, 93128 Regenstauf (DE)
(72) Erfinder: Ludwig, Detlef, D-47228 Duisburg (DE)
(74) Vertreter: Graf, Helmut

(57) **Zusammenfassung**

Verfahren zum Messen der Temperatur (T) eines einen Kanal durchströmenden Mediums mit einem an einer Außenfläche einer Kanalwandung angeordneten Temperatursensor.

## Beschreibung

Die Erfindung bezieht sich auf ein Verfahren gemäß Oberbegriff Patentanspruch 1 sowie auf eine Vorrichtung gemäß Oberbegriff Patentanspruch 7.

Vielfach besteht das Problem, die Temperatur eines einen Kanal durchströmenden Mediums, beispielsweise eines gas- und/oder dampfförmigen Mediums oder eines flüssigen Mediums zu messen, und zwar ohne dass der dabei verwendete Temperatursensor in den Kanal eingeführt ist. Bei einer Temperaturmessung an der Außenseite der Wandung des Kanals ergeben sich Messfehler durch den unvermeidlichen Wärmestrom zwischen der Kanalwand und der Umgebung.

Verfahren sowie Vorrichtungen zur Temperaturmessung entsprechend dem Oberbegriff des Patentanspruchs 1 bzw. 10 sind grundsätzlich bekannt (US 6 220 750 B1; DE 2 121 189 A1). Bei den bekannten Verfahren und Vorrichtungen geht es aber ausschließlich um die Messung der Temperatur im Inneren von Festkörpern, nicht um die Messung der Temperatur eines einen Kanal durchströmenden Mediums.

Aufgabe der Erfindung ist es, ein Verfahren sowie einen Temperatursensor aufzuzeigen, welches bzw. welcher eine exakte Bestimmung der Temperatur eines einen Kanal durchströmenden Mediums ermöglicht, und zwar durch Messen an der Außenseite der Kanalwandung. Zur Lösung dieser Aufgabe ist ein Verfahren entsprechend dem Patentanspruch 1 ausgebildet. Eine Vorrichtung ist Gegenstand des Patentanspruchs 7.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: in sehr vereinfachter schematischer Darstellung und im Schnitt einen von einem Medium durchströmten Kanal in Form eines Rohres, zusammen mit einem an der Außenseite des Kanals angebrachten Temperatursensor gemäß der Erfindung;
- Fig. 2: den schematischen Aufbau des erfindungsgemäßen Temperatursensors.

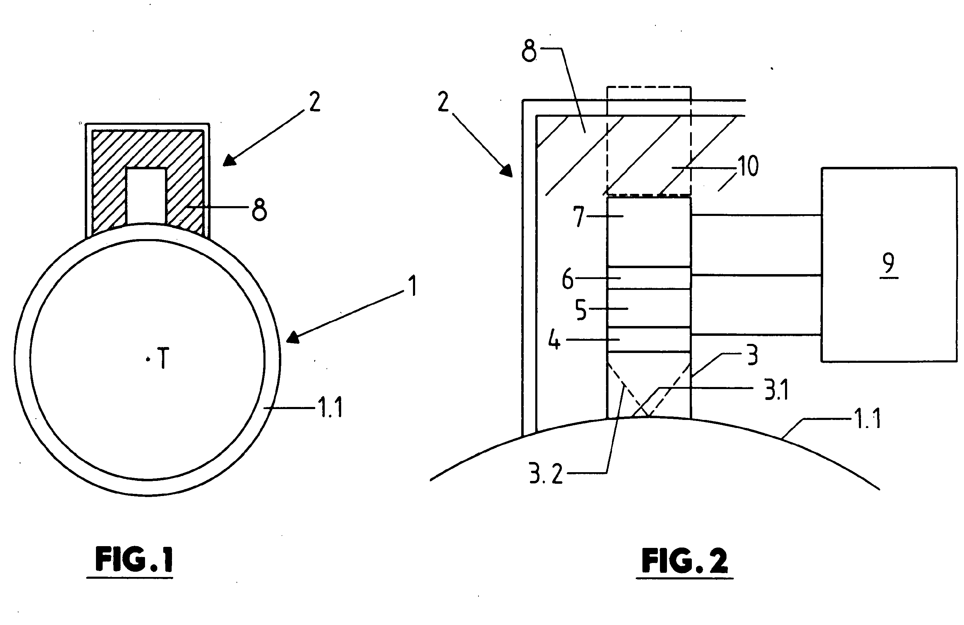

In den Figuren ist 1 ein beispielsweise aus einem metallischen Material, z.B. aus Kupfer oder Stahl (z.B. auch Edelstahl) hergestelltes Rohr, welches senkrecht zur Zeichenebene der Figur 1 von einem gas- und/oder dampfförmigen und/oder flüssigen Medium durchströmt wird. An der Außenfläche der Rohrwand 1.1 des Rohesr 1 ist ein Temperatursensor 2 vorgesehen, mit dem die Temperatur des das Rohr 1 durchströmenden Mediums gemessen werden soll.

Ein grundsätzliches Problem bei der Messung der Temperatur T des das Rohr 1 durchströmenden Mediums an der Rohraußenfläche besteht darin, dass das Messergebnis, würde die Messung mit einem herkömmlichen Temperatursensor oder -fühler durchgeführt, durch den Wärmestrom zwischen der Rohrwand 1.1 und der Umgebung stark verfälscht wird.

Der Temperatursensor 2 ist daher in spezieller Weise aufgebaut, und zwar derart, dass er eine Kompensation des Einflusses des Wärmestromflusses zwischen der Rohrwand 1.1 und der Umgebung ermöglicht. Im Einzelnen besteht der mit Spannmitteln, beispielsweise mit wenigstens einem Spannband an der Außenseite des Rohres 1 befestigte Sensor 2 aus einem Sensorelement oder Kopfstück 3, der aus einem Material mit hoher Wärmeleitfähigkeit, beispielsweise aus einem Metall, z.B. aus Kupfer gefertigt ist und mit dem der Temperatursensor 2 im Verwendungsfall mit einem Anlagebereich 3.1 gegen die Außenfläche des Rohres 1 anliegt. Dem Anlagebereich 3.1 gegenüberliegend ist wenigstens ein elektrischer Temperaturfühler 4, beispielsweise in Form eines PT100 vorgesehen. Auf der dem Sensorelement 3 abgewandten Seite des Temperaturfühlers 4 schließt sich ein Referenzkörper 5 an, der aus einem dem Material der Rohrwand 1.1 und/oder dem Temperaturverhalten dieser Rohrwand entsprechenden Material besteht, und zwar bevorzugt auch mit einer der Wandstärke der Rohrwand 1 entsprechenden Dicke. An der dem Temperaturfühler 4 abgewandten Seite des Referenzkörpers 5 schließen an diesen ein weiterer Temperaturfühler 6, beispielsweise in Form eines PT100, und an diesen ein elektrisch betriebenes und in seiner Heizleistung steuerbares Heizelement 7 an.

Die vorstehend erwähnten Funktionselemente des Temperatursensors 2, nämlich das Kopfstück 3, der Temperaturfühler 4, der Referenzkörper, der Temperaturfühler 6 und das Heizelement 7 sind also im Bezug auf die Wärmeströme innerhalb des Temperatursensors 2 in Serie mit einander angeordnet.

Mit 8 ist eine thermische Isolierung bezeichnet, die die vorstehend genannten Funktionselemente des Temperatursensors 2 in der Weise umschließt, dass lediglich die Anlagefläche 3.1 des Kopfstücks 3 für die Anlage gegen die Außenfläche des Rohres 1 freiliegt.

Der Temperaturfühler 4 dient der eigentlichen Messung der Temperatur T des das Rohr 1 durchströmenden Mediums, während der Referenzkörper 5, der elektrische Temperaturfühler 6 sowie das elektrisch betriebene Heizelement 7 zur Kompensation des das Messergebnis beeinträchtigenden Wärmestroms zwischen der Rohrwand 1.1 und der Umgebung dient, wobei mit dem Referenzkörper 5 das thermische Verhalten der Rohrwand 1.1 des Rohres 1 nachgebildet wird.

Die Temperaturfühler 4 und 6 sind mit einer Regelelektronik 9 verbunden, mit der die Heizleistung des Heizelementes 7 gesteuert bzw. geregelt wird. Die Regelung der Heizleistung erfolgt dabei so, dass die Differenz der mit den Temperaturfühlern 4 und 6 ermittelten Temperaturen bzw. die diesen Temperaturen entsprechenden elektrischen Messsignale einen vorgegebenen Wert aufweisen, beispielsweise den Wert Null.

Anhand der elektrischen Werte der Temperaturfühler 4 und 6 bzw. der hiervon abgeleiteten elektrischen Messsignale kann dann die Temperatur des das Rohr 1 durchströmenden Mediums sehr genau bestimmt werden, wobei sich optimale Messergebnisse insbesondere dann erreichen lassen, wenn folgende Bedingungen erfüllt sind:
1. Das Rohr 1 besitzt eine geringe Wandstärke und besteht aus einem Material mit hoher Wärmeleitfähigkeit.
2. Das das Rohr 1 durchströmende Medium, dessen Temperatur T gemessen werden soll, besitzt eine reduzierte Fließgeschwindigkeit und hohe Wärmekapazität, d.h. das Medium ist beispielsweise ein flüssiges Medium, z.B. Wasser oder eine andere Flüssigkeit.
3. Der Temperatursensor 2 bzw. dessen Sensorelement 3 liegen mit ausreichend großer Auflagefläche an der Außenfläche des Rohres 1 so an, dass ein optimaler Wärmeübergang zwischen dem Rohr 1 und dem Kopfstück 3 gegeben ist, d.h. ein geringer Wärmeübergangswiderstand zwischen dem Rohr und dem Temperatursensor 2 besteht.
4. Der Temperatursensor 2 bzw. dessen Funktionselemente sind mit geringer Wärmekapazität ausgeführt, d.h. insbesondere das Kopfstück 3 sowie auch der Referenzkörper 5 besitzen ein möglichst reduziertes Volumen, um kurze Ansprechzeiten zu erreichen.
5. Die Funktionselemente des Temperatursensors 2 sind durch die Isolierung 8 thermisch möglichst optimal gegenüber der Umgebung abgeschirmt.

Mit unterbrochenen Linien ist in der Figur 2 ein zusätzlicher Wärmeleiter 10 angedeutet, der zwischen der dem Temperaturfühler 6 abgewandten Oberseite des Heizelementes 7 und dem Außenbereich angeordnet ist und hierfür aus dem Gehäuse vorsteht. Durch diesen weiteren Wärmeleiter 10 erfolgt ein beschleunigter Ausgleich der durch das Heizelementes 7 eingebrachten Wärme, sodass die Reaktionszeit des Temperatursensors 2 bei fallenden Medientemperaturen stark reduziert wird. Dieser Vorteil wird allerdings mit einem gewissen Nachteil einer erhöhten Heizleistung des Heizelementes 7 erkauft, da ein Teil der Wärmeenergie permanent an die Außenwelt abgegeben wird.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird. So ist es beispielsweise möglich, anstelle des Temperaturfühlers 4 und/oder 6 auch mehrere Temperaturfühler im Bezug auf den Wärmestrom nebeneinander, d.h. parallel oder hintereinander vorzusehen.

Wie in der Figur 2 mit unterbrochenen Linien bei 3.2 angedeutet, kann der Anlagebereich auch spitz- oder dachschrägenartig sich zum Rohr 1 verjüngend ausgebildet sein.

### Bezugszeichenliste

- 1: Rohr
- 1.1: Rohrwand
- 2: Temperatursensor
- 3: Sensorkopf oder Kopfstück
- 3.1, 3.2: Anlagefläche oder -bereich
- 4: Temperaturfühler
- 5: Referenzkörper
- 6: Temperaturfühler
- 7: Heizelement
- 8: Isolierung
- 9: Regelelektronik

## Patentansprüche

1. Verfahren zum Messen der Temperatur (T) innerhalb eines Messobjektes (1.1) mit einem an dessen Außenfläche angeordneten Temperatursensor (2),
wobei die Temperaturmessung unter Verwendung wenigstens eines ersten, thermisch mit der Außenfläche (1.1) verbundenen Temperaturfühlers (4), unter Verwendung wenigstens eines zweiten Temperaturfühlers (6), der thermisch mit dem wenigstens einen ersten Temperaturfühler (4) verbunden ist, sowie unter Verwendung eines in der Heizleistung steuerbaren Heizelementes (7) erfolgt, welches thermisch mit dem wenigstens einen zweiten Temperaturfühler (6) verbunden ist,
wobei die Heizleistung des wenigstens einen Heizelementes (7) derart gesteuert oder geregelt wird, dass die Differenz der Temperaturen, die mit dem wenigstens einem ersten und wenigstens einem zweiten Temperaturfühler (4, 6) ermittelt werden, und/oder die Differenz der von dem wenigstens einen ersten und zweiten Temperaturfühler (4, 6) abgeleiteten elektrischen Messsignale, die diesen Temperaturen entsprechen, einen vorgegebenen Wert aufweist, und
wobei aus dem von wenigstens einem Temperaturfühler abgeleiteten Messsignal die Temperatur (T) des den Kanal (1) durchströmenden Mediums ermittelt wird,
**dadurch gekennzeichnet,**
**dass** zum Messen der Temperatur (T) eines einen Kanal durchströmenden Mediums der zweite Temperaturfühler (6) des an der Außenfläche einer Kanalwandung (1.1) angeordneten Temperatursensor (2) über einen das thermische Verhalten der Kanalwand (1.1) nachbildenden Referenzkörper (5) thermisch mit dem wenigstens einen ersten Temperaturfühler (4) verbunden ist.

2. Verfahren nach Anspruch 1, **dadurch gekennzeichnet, dass** das den Kanal (1) durchströmende Medium ein gas- und/oder dampfförmiges und/oder flüssiges Medium ist.

3. Verfahren nach Anspruch 1 oder 2, **dadurch gekennzeichnet, dass** die Heizleistung des wenigstens einen Heizelementes (7) derart gesteuert oder geregelt wird, dass insbesondere bei kalibrierten Messsignalen der Temperaturfühler (4, 6) die Differenz dieser Messsignale Null ist.

4. Verfahren nach einem der vorhergehenden Ansprüche, **dadurch gekennzeichnet,**
**dass** der wenigstens eine erste Temperaturfühler (4) und/oder der wenigstens eine zweite Temperaturfühler (6) ein elektrisches Bauteil mit einem temperaturabhängigen Widerstand, beispielsweise ein PT100 sind,
und/oder
**dass** der wenigstens eine erste Temperaturfühler (4) über einen Körper oder ein passives Sensorelement (3) aus einem Material mit hoher Wärmeleitfähigkeit thermisch mit der Kanalwand (1.1) verbunden ist.

5. Verfahren nach einem der vorhergehenden Ansprüche, **dadurch gekennzeichnet, dass** der Kanal ein Rohr (1) ist und/oder dass die Kanalwand (1.1) aus einem Material mit hoher Wärmeleitfähigkeit, beispielsweise aus Metall besteht.

6. Verfahren nach einem der vorhergehenden Ansprüche, **dadurch gekennzeichnet, dass** die Funktionselemente des Temperatursensors (2) zumindest teilweise in Serie aufeinander folgend angeordnet sind, und zwar ausgehend von einer Anlagefläche (3.1), mit der der Temperatursensor (2) gegen die Kanalwand (1.1) anliegt in der folgenden Reihenfolge:
- der wenigstens eine erste Temperaturfühler (4),
- der Referenzkörper (5),
- der wenigstens eine zweite Temperaturfühler (6) und
- das wenigstens eine Heizelement (7).

7. Vorrichtung oder Temperatursensor zum Messen der Temperatur (T) innerhalb eines Messobjektes (1.1),
mit wenigstens einem ersten, thermisch mit der Außenfläche des Messobjektes (1.1) verbundenen Temperaturfühlers (4),
mit wenigstens einem zweiten Temperaturfühlers (6), der thermisch mit dem wenigstens einen ersten Temperaturfühler (4) verbunden ist, sowie
mit einem in der Heizleistung steuerbaren Heizelementes (7), welches thermisch mit dem wenigstens einen zweiten Temperaturfühler (6) verbunden ist,
**dadurch gekennzeichnet,**
**dass** zum Messen der Temperatur (T) eines einen Kanal durchströmenden Mediums der Temperatursensor (2) an der Außenfläche einer Kanalwandung (1.1) angeordnet und der wenigstens eine zweite Temperaturfühler (6) über einen das thermische Verhalten der Kanalwand (1.1) nachbildenden Referenzkörper (5) thermisch mit dem wenigstens einen ersten Temperaturfühler (4) verbunden ist.

8. Vorrichtung nach Anspruch 8, **dadurch gekennzeichnet, dass** die Heizleistung des wenigstens einen Heizelementes (7) derart steuerbar oder regelbar ist, dass die Differenz der Temperaturen, die mit dem wenigstens einem ersten und wenigstens einem zweiten Temperaturfühler (4, 6) ermittelt werden, und/oder die Differenz der von dem wenigstens einen ersten und zweiten Temperaturfühler (4, 6) abgeleiteten elektrischen Messsignale, die diesen Temperaturen entsprechen, einen vorgegebenen Wert aufweist.

9. Vorrichtung nach Anspruch 8 oder 9, **dadurch gekennzeichnet, dass** das den Kanal (1) durchströmende Medium ein gas- und/oder dampfförmiges und/oder flüssiges Medium ist.

10. Vorrichtung nach einem der vorhergehenden Ansprüche, **dadurch gekennzeichnet, dass** die Heizleistung des wenigstens einen Heizelementes (7) derart steuerbar oder regelbar ist, dass insbesondere bei kalibrierten Messsignalen der Temperaturfühler (4, 6) die Differenz dieser Messsignale Null ist.

11. Vorrichtung nach einem der vorhergehenden Ansprüche, **dadurch gekennzeichnet,**
**dass** der wenigstens eine erste Temperaturfühler (4) und/oder der wenigstens eine zweite Temperaturfühler (6) ein elektrisches Bauteil mit einem temperaturabhängigen Widerstand, beispielsweise ein PT100 sind,
und/oder
**dass** der wenigstens eine erste Temperaturfühler (4) über einen Körper oder ein passives Sensorelement (3) aus einem Material mit hoher Wärmeleitfähigkeit thermisch mit der Kanalwand (1.1) verbunden ist.

12. Vorrichtung nach einem der vorhergehenden Ansprüche, **dadurch gekennzeichnet, dass** der Kanal ein Rohr (1) ist und/oder dass die Kanalwand (1.1) aus einem Material mit hoher Wärmeleitfähigkeit, beispielsweise aus Metall besteht.

13. Vorrichtung nach einem der vorhergehenden Ansprüche, **dadurch gekennzeichnet, dass** die Funktionselemente des Temperatursensors (2) zumindest teilweise in Serie aufeinander folgend angeordnet sind, und zwar ausgehend von einer Anlagefläche (3.1), mit der der Temperatursensor (2) gegen die Kanalwand (1.1) anliegt in der folgenden Reihenfolge:
- der wenigstens eine erste Temperaturfühler (4),
- der Referenzkörper (5),
- der wenigstens eine zweite Temperaturfühler (6) und
- das wenigstens eine Heizelement (7).

14. Vorrichtung nach einem der vorhergehenden Ansprüche, **dadurch gekennzeichnet, dass** das Heizelement (7) über einen Wärmeleiter (10) mit der Umgebung thermisch verbunden ist.

15. Vorrichtung nach Anspruch 20, **dadurch gekennzeichnet, dass** der Wärmeleiter (10) thermisch mit der dem zweiten Temperaturfühler (6) abgewandten Seite des Heizelementes (7) verbunden ist.
